# EUROPEAN PATENT APPLICATION

(11) **EP 4 813 618 A2**
(43) Date of publication of application: **30.09.2026**
(21) Application number: 26192001.1
(22) Date of filing: 25.09.2024
(51) Int. Cl.: B29C 70/54

(54) **CERAMIC MATRIX COMPOSITE STRUCTURES AND METHODS FOR MANUFACTURE THEREOF**

(30) Priority: 29.11.2023 US 202363603867 P; 22.01.2024 NL 2036856
(62) Document number(s) of the earlier application(s) in accordance with Art. 76 EPC: 24202430.5 / 4 563 330
(71) Applicant: The Boeing Company, Arlington, VA 22202 (US)
(72) Inventor: Wienhold, Erik N., Arlington, 22202 (US); Heng, Sangvavann, Arlington, 22202 (US); Trowbridge, Michael J., Arlington, 22202 (US); Smith, Brian J., Arlington, 22202 (US); Johnson, Brice A., Arlington, 22202 (US); Zgherea, Lisa C., Arlington, 22202 (US); Brown, Christopher R., Arlington, 22202 (US); Fritzke, Ricardo A., Arlington, 22202 (US)
(74) Representative: Arnold & Siedsma

(57) **Abstract**

An electronically-controlled method is provided for manufacturing a ceramic matrix composite structure with a desired shape. The electronically-controlled method comprises picking a first ceramic matrix composite ply that is sandwiched between a first bottom backing film and a first top backing film, and peeling away the first bottom backing film from the first ceramic matrix composite ply. The electronically-controlled method also comprises placing the first ceramic matrix composite ply on a tool surface with the first top backing film facing away from the tool surface, and positioning a vacuum membrane against the first ceramic matrix composite ply that is on the tool surface to provide a vacuum-tight seal against the first ceramic matrix composite ply. The electronically-controlled method further comprises drawing a vacuum to pull the vacuum membrane against the first ceramic matrix composite ply and thereby to form the first ceramic matrix composite ply to shape of the tool surface, and releasing the vacuum. The electronically-controlled method also comprises after the vacuum is released, peeling away the first top backing film from the first ceramic matrix composite ply and thereby to provide the ceramic matrix composite structure with the desired shape.

## Description

The present application relates to composite structures and, more particularly, to ceramic matrix composite structures and methods for manufacture thereof.

Ceramic matrix composites have different tack and texture than polymer matrix composites that require different methods of processing. Ceramic fibers of ceramic matrix composites are more brittle and stiffer than carbon fibers of polymer matrix composites. More brittle and stiffer fibers along with different organic tackifier constituent of the ceramic fibers require different methods of processing during manufacture of ceramic matrix composite structures.

A typical ceramic matrix composite structure is manufactured using a hand-layup process. A drawback in using a hand-layup process to manufacture a ceramic matrix composite structure is variability of quality and consistency of the ceramic matrix composite structure. As such, manual inspection and rework are often required. Another drawback is that the hand-layup process is time-intensive and requires skilled technicians. The overall result is increased cycle time as well as increased labor costs to manufacture the ceramic matrix composite structure.

Despite advances already made, those skilled in the art continue with research and development efforts in the field of manufacturing ceramic matrix composite structures.

WO2020/081348A2 discloses, in its abstract: A system and method for separating a layer from a layer assembly when the layer assembly includes a backing layer and a material layer. The system includes an automated machine having a controller and an end effector. A separating tool is attached to the end effector of the automated machine. The separating tool includes a displacing member, with an outer face, configured to establish a void between the backing layer and the material layer by displacing a portion of the backing layer. The separating layer also includes a securing member configured to establish a mechanical connection with a displaced portion of the backing layer.

EP3473415 discloses, in its abstract: Methods for manufacturing composite components having complex geometries are provided. In one exemplary aspect, a method includes laying up each of a plurality of laminates to an initial shape with a substantially planar geometry or a gently curved geometry. Then, a laid up laminates formed to a final shape for each predefined section defined by the composite component to be manufactured. Thereafter, the laminates formed to their respective final shapes are stacked to build up the complex geometry of the composite component. Next, the composite component can be cured and finish machined as necessary to form the completed composite component.

In one aspect, an electronically-controlled method is provided for manufacturing a non-polymer structure with a desired shape. The electronically-controlled method comprises placing a non-polymer ply of material on a forming tool.

In another aspect, an electronically-controlled method is provided for manufacturing a ceramic matrix composite structure with a desired shape. The electronically-controlled method comprises picking a first ceramic matrix composite ply that is sandwiched between a first bottom backing film and a first top backing film, and peeling away the first bottom backing film from the first ceramic matrix composite ply. The electronically-controlled method also comprises placing the first ceramic matrix composite ply on a tool surface with the first top backing film facing away from the tool surface, and positioning a vacuum membrane against the first ceramic matrix composite ply that is on the tool surface to provide a vacuum-tight seal against the first ceramic matrix composite ply. The electronically-controlled method further comprises drawing a vacuum to pull the vacuum membrane against the first ceramic matrix composite ply and thereby to form the first ceramic matrix composite ply to shape of the tool surface, and releasing the vacuum. The electronically-controlled method also comprises after the vacuum is released, peeling away the first top backing film from the first ceramic matrix composite ply and thereby to provide the ceramic matrix composite structure with the desired shape. This aspect may be combined with the previously described aspect of the disclosure or may be provided as a separate aspect.

In yet another aspect, a manufactured composite structure comprises at least one ply of non-polymer material. Each ply is capable of withstanding temperatures up to 1,315 °C (2400 degrees Fahrenheit) during operational use of the manufactured composite structure.

Other aspects will become apparent from the following detailed description, the accompanying drawings and the appended claims.
Fig. 1 is schematic block diagram of an apparatus for manufacturing a ceramic matrix composite structure in accordance with an embodiment.
Fig. 2A is an elevational view of a first non-polymer ply that is processed to provide a ceramic matrix composite structure.
Fig. 2B is an elevational view of a second non-polymer ply that is processed with the first non-polymer ply of Fig. 2A to provide a ceramic matrix composite structure.
Figs. 3A-3J are elevational views showing certain components of the manufacturing apparatus of Fig. 1 in different positions during manufacture of a ceramic matrix composite structure.
Fig. 4 is an enlarged elevational view of an example ceramic matrix composite structure manufactured in accordance with Figs. 3A-3J.
Fig. 5 is an overall flow diagram depicting an example method for manufacturing a ceramic matrix composite structure in accordance with an embodiment.
Fig. 6 is a flow diagram depicting an example electronically-controlled method for manufacturing a ceramic matrix composite structure in accordance with an embodiment.
Fig. 7 is a flow diagram depicting an example electronically-controlled method for manufacturing a ceramic matrix composite structure in accordance with another embodiment.
Fig. 8 is a flow diagram of an aircraft manufacturing and service methodology.
Fig. 9 is a block diagram of an aircraft.

The present application is directed to ceramic matrix composite structures and methods for manufacture thereof. The specific construction of the ceramic matrix composite structures and methods for manufacture thereof and the industry in which the structures and methods are implemented may vary. It is to be understood that the disclosure below provides a number of embodiments or examples for implementing different features of various embodiments. Specific examples of components and arrangements are described to simplify the present disclosure. These are merely examples and are not intended to be limiting.

By way of example, the disclosure below describes ceramic matrix composite structures and methods for manufacturing at least a portion of an aircraft, such as an aircraft exhaust structure. The ceramic matrix composite structures and methods for manufacture thereof may be implemented by an original equipment manufacturer (OEM) in compliance with commercial, military, and space regulations. It is conceivable that the disclosed ceramic matrix composite structures and methods for manufacture thereof may be implemented in many other ceramic matrix composite manufacturing industries.

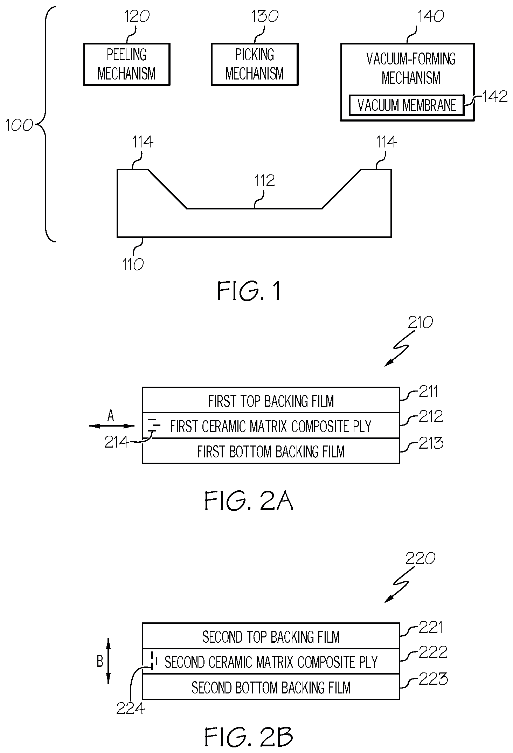

Referring to Fig. 1, a schematic block diagram of an apparatus 100 for manufacturing a ceramic matrix composite structure in accordance with an embodiment is illustrated. The apparatus 100 comprises a tool 110 having a tool surface 112. The tool surface 112 has optional steps 114 in vicinity of the perimeter of the tool 110. The apparatus 100 further comprises a number of mechanisms including a peeling mechanism 120, a picking mechanism 130, and a vacuum-forming mechanism 140.

The picking mechanism 130 is a gripper end effector for picking and placing a sheet (e.g., a ply) of material on the tool surface 112 of the tool 110. The picking mechanism 130 may comprise electrostatic grippers or vacuum grippers, for example. The vacuum-forming mechanism 140 includes a vacuum membrane 142. Structure and operation of peeling mechanisms, picking mechanisms, and vacuum-forming mechanism are known and conventional and, therefore, will not be described.

Referring to Fig. 2A, an elevational view of a first non-polymer ply 210 that is processed to provide a ceramic matrix composite structure is illustrated. The first non-polymer ply 210 includes a first ceramic matrix composite ply 212 that is sandwiched between a first top backing film 211 and a first bottom backing film 213. The first ceramic matrix composite ply 212 has first fiber reinforcements 214 that are oriented in a first direction shown as arrow A in Fig. 2A. The first fiber reinforcements 214 comprise ceramic fibers, and the matrix is a ceramic-based material. Alternatively, the first ceramic matrix composite ply 212 may comprise a ceramic matrix composite ply having a fabric that is pre-impregnated with a matrix material, such as C_{f}/Si or SiC_{f}/SiC for example.

The first ceramic matrix composite ply 212 is a non-polymer material, and has a viscosity between about 3000 Poise and 7000 Poise. Tackiness of the first ceramic matrix composite ply 212 may vary as a function of an amount of water contained in the first ceramic matrix composite ply 212. Alternatively, tackiness of the first ceramic matrix composite ply 212 may vary as a function of an amount of solvent (e.g., non-water based) contained in the first ceramic matrix composite ply 212. Other water-based and non-water based compounds are possible. The weight of the first ceramic matrix composite ply 212 for a given volume of the first ceramic matrix composite ply 212 is less than weight of an equivalent volume of metal material, such as steel for example.

Referring to Fig. 2B, an elevational view of a second non-polymer ply of material 220 that is processed with the first non-polymer ply 210 of Fig. 2A to provide a ceramic matrix composite structure is illustrated. The second non-polymer ply of material 220 includes a second ceramic matrix composite ply 222 that is sandwiched between a second top backing film 221 and a second bottom backing film 223. The second ceramic matrix composite ply 222 has second fiber reinforcements 224 that are oriented in a second direction shown as arrow B in Fig. 2B. The second direction B of the second fiber reinforcements 224 is transverse (e.g., perpendicular) to the first direction A of the first fiber reinforcements 214. It is conceivable that the second direction B of the second fiber reinforcements 224 be non-transverse (e.g., parallel) to the first direction A of the first fiber reinforcements 214. The second fiber reinforcements 224 comprise ceramic fibers, and the matrix is a ceramic-based material. Alternatively, the second ceramic matrix composite ply 222 may comprise a ceramic matrix composite ply having a fabric that is pre-impregnated with a matrix material, such as C_{f}/Si or SiC_{f}/SiC for example.

The second ceramic matrix composite ply 222 is a non-polymer material, and has a viscosity between about 3000 Poise and 7000 Poise. Tackiness of the second ceramic matrix composite ply 222 may vary as a function of an amount of water contained in the second ceramic matrix composite ply 222. Alternatively, tackiness of the second ceramic matrix composite ply 222 may vary as a function of an amount of solvent (e.g., non-water based) contained in the second ceramic matrix composite ply 222. Other water-based and non-water based compounds are possible. The weight of the second ceramic matrix composite ply 222 for a given volume of the second ceramic matrix composite ply 222 is less than weight of an equivalent volume of metal material, such as steel for example.

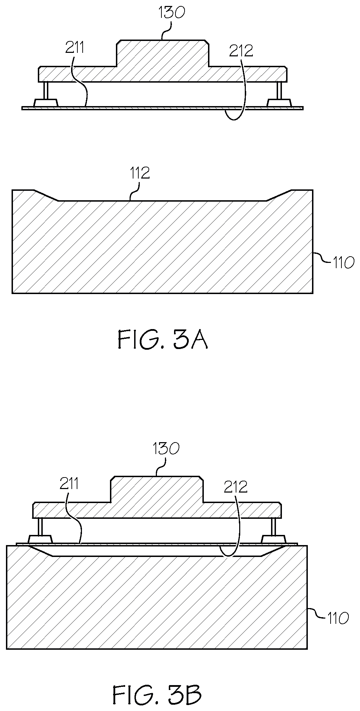

Referring to Fig. 3A-3J, elevational views show certain components of the manufacturing apparatus 100 of Fig. 1 in different positions during manufacture of a ceramic matrix composite structure. As shown in Fig. 3A, the picking mechanism 130 is picking up the first non-polymer ply 210 (Fig. 2A) minus the first bottom backing film 213, which has been removed by the peeling mechanism 120 (Fig. 1). Alternatively, the first bottom backing film 213 may have been removed by a peeling mechanism (not shown) located at a remote peeling station. Thus, the picking mechanism 130 in Fig. 3A is holding up the first ceramic matrix composite ply 212 and the first top backing film 211.

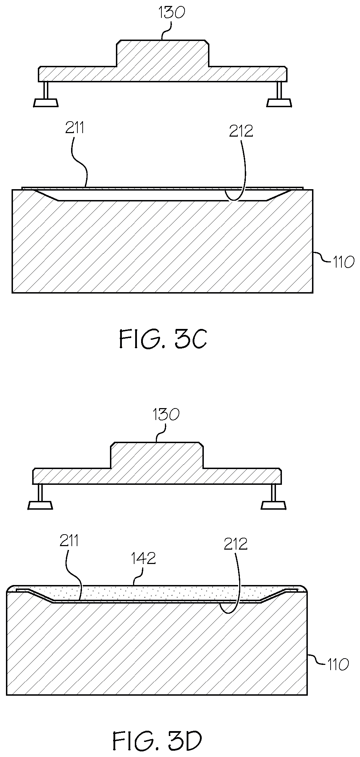

As shown in Fig. 3B, the picking mechanism 130 lowers the first ceramic matrix composite ply 212 and the first top backing film 211 onto the tool 110. The picking mechanism 130 is then lifted away from the tool 110 as shown in Fig. 3C, leaving behind the first ceramic matrix composite ply 212 and the first top backing film 211 on the tool 110. Then, as shown in Fig. 3D, the vacuum membrane 142 (Fig. 1) is positioned over the tool 110, referred to as "bagging" with the vacuum membrane 142, and the vacuum-forming mechanism 140 applies a vacuum to compact the first ceramic matrix composite ply 212 and the first top backing film 211 to the shape of the tool 110.

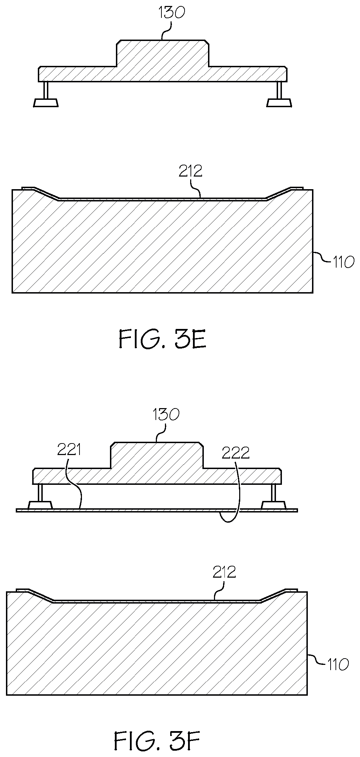

After the first ceramic matrix composite ply 212 and the first top backing film 211 are formed to the shape of the tool 110, the vacuum and the vacuum membrane 142 are removed and the first top backing film 211 is then removed, leaving behind only the first ceramic matrix composite ply 212 on the tool 110, as shown in Fig. 3E. Thus, the first ceramic matrix composite ply 212 shown in Fig. 3E is formed to the shape of the tool 110.

Then, as shown in Fig. 3F, the picking mechanism 130 is picking up the second non-polymer ply of material 220 (Fig. 2B) minus the second bottom backing film 223, which has been removed by the peeling mechanism 120 (Fig. 1). Thus, the picking mechanism 130 in Fig. 3F is holding up the second ceramic matrix composite ply 222 and the second top backing film 221.

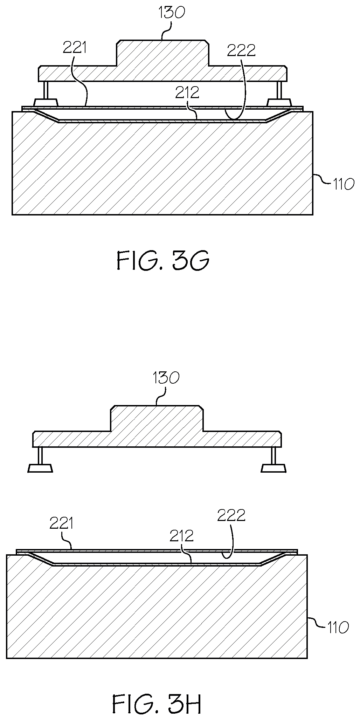

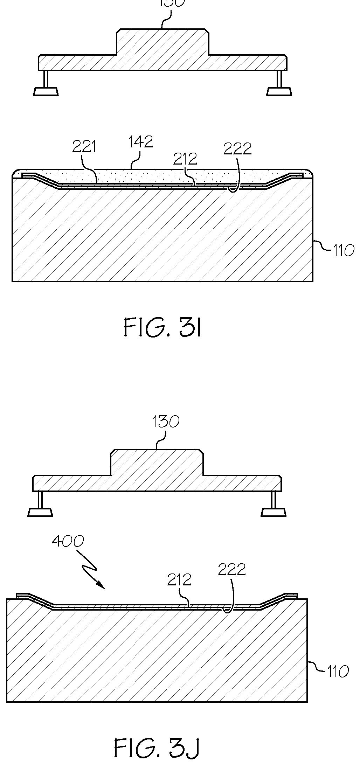

As shown in Fig. 3G, the picking mechanism 130 lowers the second ceramic matrix composite ply 222 and the second top backing film 221 onto the shaped first ceramic matrix composite ply 212 of Fig. 3E. The picking mechanism 130 is then lifted away from the tool 110 as shown in Fig. 3H, leaving behind the second ceramic matrix composite ply 222 and the second top backing film 221. Then, as shown in Fig. 3I, the vacuum membrane 142 (Fig. 1) is positioned over the tool 110, and the vacuum-forming mechanism 140 applies a vacuum to compact the second ceramic matrix composite ply 222 and the second top backing film 221 to the shaped first ceramic matrix composite ply 212 of Fig. 3E.

After the second ceramic matrix composite ply 222 and the second top backing film 221 are formed to the shaped first ceramic matrix composite ply 212 of Fig. 3E, the vacuum and the vacuum membrane 142 are removed and the second top backing film 211 is then removed, leaving behind only the second ceramic matrix composite ply 222, as shown in Fig. 3J. Thus, the second ceramic matrix composite ply 222 shown in Fig. 3J is formed to the shape of the shaped first ceramic matrix composite ply 212 of Fig. 3E and the shape of the tool 110.

The result in Fig. 3J is a ceramic matrix composite structure 400 comprising the shaped second ceramic matrix composite ply 222 and the shaped first ceramic matrix composite ply 212 on the tool 110. The first fiber reinforcements 214 (Fig. 2A) of the first ceramic matrix composite ply 212 and the second fiber reinforcements 224 (Fig. 2B) of the second ceramic matrix composite ply 222 are oriented relative to each other during placement of the first and second ceramic matrix composite plies 212, 222 onto the tool 110 such that the first and second fiber reinforcements 214, 224 reinforce each other to provide an improved ceramic matrix composite structure 400 of Fig. 3J with the desired shape.

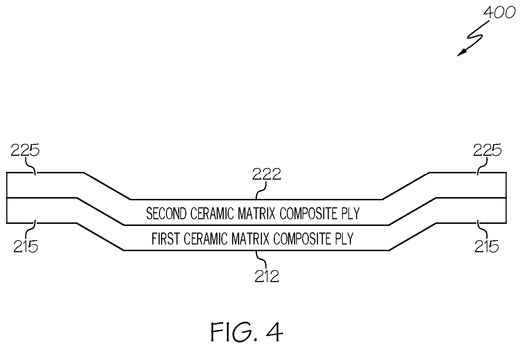

The improved ceramic matrix composite structure 400 is shown enlarged in Fig. 4. The shaped first ceramic matrix composite ply 212 has optional flanges 215, and the shaped second ceramic matrix composite ply 222 has optional flanges 225. The optional flanges 215, 225 depend upon shape of the tool surface 112 of the tool 110, and whether the optional steps 114 (Fig. 1) are provided in vicinity of the perimeter of the tool 110. The optional flanges 215, 225 provide an attachment interface for installing the ceramic matrix composite structure 400.

As an example, an aircraft part or a portion of an aircraft may comprise the ceramic matrix composite structure 400 including the optional flanges 215, 225. Aircraft includes missiles, launch vehicles, high-speed aircraft, and rockets, for example. Aircraft parts include engine exhaust structures, for example. Other types of aircraft and other aircraft parts or systems are possible.

Although the above-described example ceramic matrix composite structure 400 contains two plies (i.e., the first ceramic matrix composite ply 212 and the second ceramic matrix composite ply 222), it is conceivable that a ceramic matrix composite structure contains three or more plies. It is also conceivable that a ceramic matrix composite structure contains only one ply.

Also, although the above description describes the first bottom backing film 213 being removed before the first ceramic matrix composite ply 212 is placed on the tool 110, it is conceivable the first bottom backing film 213 be removed after the ceramic matrix composite structure 400 of Fig. 3J with the desired shape has been formed.

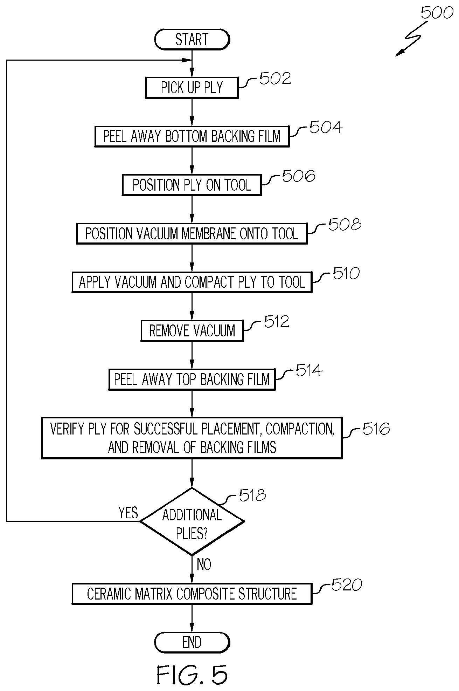

Referring to Fig. 5, an overall flow diagram 500 depicts an example method for manufacturing a ceramic matrix composite structure in accordance with an embodiment. In block 502, a ceramic matrix composite ply is picked up before a bottom backing film is peeled away as shown in block 504. Then, in block 506, the ceramic matrix composite ply is positioned on a tool before a vacuum membrane is positioned onto the tool as shown in block 508.

A vacuum is then applied, as shown in block 510, to compact the ceramic matrix composite ply to the tool. The process proceeds to block 512 in which the vacuum is removed/released before a top backing film is peeled away as shown in block 514. The process proceeds to block 516 in which in-situ inspection is provided to verify the ceramic matrix composite ply for successful placement, compaction, and removal of the backing films.
A determination is then made in block 518 as to whether another ceramic matrix composite ply is to be added for the manufacturing of the ceramic matrix composite structure. If the determination in block 518 is affirmative (i.e., another ceramic matrix composite ply is to be added), the process returns to block 502 to process the next ceramic matrix composite ply. However, if the determination in block 518 is negative (i.e., there is no additional ceramic matrix composite ply), the process proceeds to block 520 in which the ceramic matrix composite structure is provided. The ceramic matrix composite structure contains at least one ceramic matrix composite ply plus any ceramic matrix composite plies added in block 518. The process then ends.

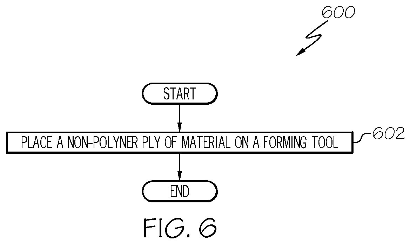

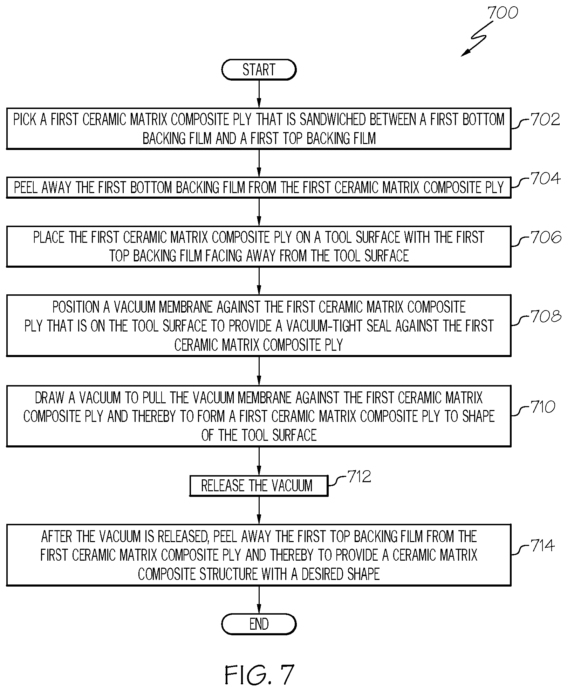

Referring to Fig. 6, a flow diagram depicts an example electronically-controlled method 600 for manufacturing a ceramic matrix composite structure in accordance with an embodiment. In block 602, a non-polymer ply of material is placed on a forming tool. The process then ends.
Referring to Fig. 7, a flow diagram 700 depicts an example electronically-controlled method for manufacturing a ceramic matrix composite structure in accordance with another embodiment. In block 702, a first ceramic matrix composite ply that is sandwiched between a first bottom backing film and a first top backing film is picked. Then in block 704, the first bottom backing film is peeled away from the first ceramic matrix composite ply. The process proceeds to block 706 in which the first ceramic matrix composite ply is placed on a tool surface with the first top backing film facing away from the tool surface. The process proceeds to block 708.

In block 708, a vacuum membrane is positioned against the first ceramic matrix composite ply that is on the tool surface to provide a vacuum-tight seal against the first ceramic matrix composite ply. Then in block 710, a vacuum is drawn to pull the vacuum membrane against the first ceramic matrix composite ply and thereby to form the first ceramic matrix composite ply to shape of the tool surface.

The vacuum is released in block 712 before proceeding to block 714. In block 714, after the vacuum is released, the first top backing film is peeled away from the first ceramic matrix composite ply and thereby to provide the ceramic matrix composite structure with the desired shape. The process then ends.

A number of advantages result by providing the above-described ceramic matrix composite structures (e.g., the ceramic matrix composite structure 400 shown in Fig. 4) and the manufacturing methods therefor. One advantage is that the laying up of ceramic matrix composite plies onto a tool is a fully automated process. Placement and compaction of plies are automated, and in-situ inspection of quality measures is provided. Quality measures that can be inspected in-situ include, but are not limited to, ply location, fiber orientation, uncompacted regions, rework path determination, and large defects of different types and sizes.

Another advantage is that both first time quality and final product consistency are improved since placement and compaction of ceramic matrix composite plies onto a tool are automated. The result is reduced rework, reduced touch labor, reduced cycle time, and therefore reduced overall manufacturing costs.

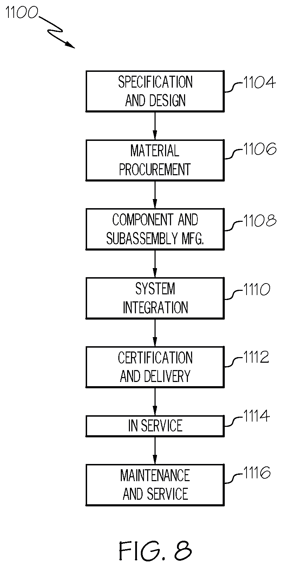

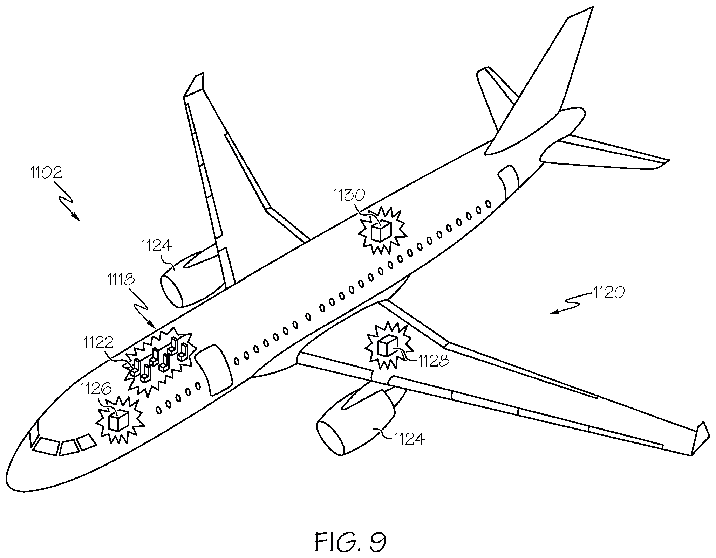

Yet another advantage is that weight of a structure made of a ceramic-based material (e.g., the ceramic matrix composite structure 400 of Fig. 4) is less than weight of the same structure made of a non-ceramic-based material, such as metal for example. Moreover, the capability of the ceramic-based material to withstand high temperatures during operational use of the structure is much higher than the capability of non-ceramic-based materials to withstand the same high temperatures. A ceramic-based material is capable of withstanding temperatures up to 1,315 °C (2400 degrees Fahrenheit). The high-temperature capability of the ceramic-based material allows a structure made of this material, such as a heat-shielding aircraft part or an aircraft exhaust structure, to be exposed to constant high temperatures (e.g., 815 °C (1500 degrees Fahrenheit) which is beyond limitation for most metals) during operational use of the structure. Thus, not only do ceramic matrix composite structures manufactured in accordance with the present disclosure have desirable weight advantages, but also have desirable thermal characteristics in applications where weight and thermal characteristics are considered important.
Examples of the disclosure may be described in the context of an aircraft manufacturing and service method 1100, as shown in Fig. 8, and an aircraft 1102, as shown in Fig. 9. During pre-production, the aircraft manufacturing and service method 1100 may include specification and design 1104 of the aircraft 1102 and material procurement 1106. During production, component/subassembly manufacturing 1108 and system integration 1110 of the aircraft 1102 takes place. Thereafter, the aircraft 1102 may go through certification and delivery 1112 in order to be placed in service 1114. While in service by a customer, the aircraft 1102 is scheduled for routine maintenance and service 1116, which may also include modification, reconfiguration, refurbishment and the like.

Each of the processes of aircraft manufacturing and service method 1100 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on. As shown in Fig. 9, the aircraft 1102 produced by the aircraft manufacturing and service method 1100 may include an airframe 1118 with a plurality of systems 1120 and an interior 1122. Examples of the plurality of systems 1120 may include one or more of a propulsion system 1124, an electrical system 1126, a hydraulic system 1128, and an environmental system 1130. Any number of other systems may be included.

The disclosed apparatus and method may be employed during any one or more of the stages of the aircraft manufacturing and service method 1100. As one example, components or subassemblies corresponding to component/subassembly manufacturing 1108, system integration 1110, and/or maintenance and service 1116 may be assembled using the disclosed apparatus method. As another example, the airframe 1118 may be constructed using the disclosed apparatus and method. Also, one or more apparatus examples, method examples, or a combination thereof may be utilized during component/subassembly manufacturing 1108 and/or system integration 1110, for example, by substantially expediting assembly of or reducing the cost of an aircraft 1102, such as the airframe 1118 and/or the interior 1122. Similarly, one or more of system examples, method examples, or a combination thereof may be utilized while the aircraft 1102 is in service, for example and without limitation, to maintenance and service 1116. An electronically-controlled method (600) according to one of the embodiments of the present application (e.g. see figure 6 and further) for manufacturing a non-polymer structure (400) with a desired shape, the electronically-controlled method (600) comprising placing (602) a non-polymer ply of material (210) on a forming tool (110). Placing (602) a non-polymer ply of material (210) on a forming tool (110) preferably includes placing a ceramic matrix composite ply (212) on the forming tool (110), wherein placing a ceramic matrix composite ply (212) on the forming tool (110) optionally includes placing a ceramic matrix composite ply (212) having fiber reinforcements (214) on the forming tool (110). Placing a non-polymer ply of material (210) on a forming tool (110) may further include placing a fabric that is pre-impregnated with a matrix material on the forming tool (110) and/or picking up the non-polymer ply of material (210) that may involve peeling away a bottom backing film (213) away from the picked non-polymer ply of material (210).

Such method may further comprise the step of applying a vacuum to form the non-polymer ply of material (210) to shape of the forming tool (110) and thereby to provide the non-polymer structure (400) with the desired shape, further preferably comprising prior to applying the vacuum, positioning a vacuum membrane (142) onto the forming tool (110) to provide a vacuum-tight seal against the non-polymer ply of material (210). Optionally, after applying the vacuum to form the non-polymer ply of material (210) to shape of the forming tool (110), a top backing film (211) may be peeled away from the shaped non-polymer ply of material (210). Furthermore, after applying the vacuum to form the non-polymer ply of material (210) to shape of the forming tool (110), another non-polymer ply of material (220) can optionally be placed on the shaped non-polymer ply of material (210). Optionally, it is possible to apply another vacuum to form the other non-polymer ply of material (220) to shape of the shaped non-polymer ply of material (210) and the forming tool (110) and thereby to form the non-polymer structure (400) with multiple non-polymer plies of material (210, 220) with the desired shape. Optionally, as an additional step, inspecting each of the non-polymer plies of material (210, 220) and the non-polymer structure (400) may be performed to verify placement and compaction of plies and removal of bottom and top backing films. Preferably, weight of the non-polymer structure (400) for a given volume of the non-polymer structure is less than weight of an equivalent volume of a metal structure.

In a further electronically-controlled method (500, 600), wherein the method is configured for manufacturing a ceramic matrix composite structure (400) (e.g. see figure 4 and further) with a desired shape, the electronically-controlled method further comprises the step steps of picking (502) a first ceramic matrix composite ply (212) that is sandwiched between a first bottom backing film (213) and a first top backing film (211), peeling away (504) the first bottom backing film (213) from the first ceramic matrix composite ply (212) placing (506) the first ceramic matrix composite ply (212) on a tool surface (112) with the first top backing film (211) facing away from the tool surface (112)positioning (508) a vacuum membrane (142) against the first ceramic matrix composite ply (212) that is on the tool surface (112) to provide a vacuum-tight seal against the first ceramic matrix composite ply (212) drawing a vacuum (510) to pull the vacuum membrane (142) against the first ceramic matrix composite ply (212) and thereby to form the first ceramic matrix composite ply (212) to shape of the tool surface (112)releasing (512) the vacuum, and after the vacuum is released (514), peeling away the first top backing film (211) from the first ceramic matrix composite ply (212) and thereby to provide the ceramic matrix composite structure (400) with the desired shape. Optionally, picking a first ceramic matrix composite ply (212) that is sandwiched between a bottom backing film (213) and a top backing film (211) includes picking a first ceramic matrix composite ply (212) having a matrix and fiber reinforcements (214) within the matrix, wherein the matrix preferably comprises a ceramic based material, and the fiber reinforcements (214) comprise ceramic fibers. Optionally, picking a first ceramic matrix composite ply (212) that is sandwiched between a bottom backing film (213) and a top backing film (211) includes picking a first ceramic matrix composite ply (212) having a fabric that is pre-impregnated with a matrix material. The method may further involve picking a second ceramic matrix composite ply (222) that is sandwiched between a second bottom backing film (223) and a second top backing film (221).

Such method may further comprise peeling away the second bottom backing film (223) from the second ceramic matrix composite ply (222), placing the second ceramic matrix composite ply (222) on the shaped first ceramic matrix composite ply (212) on the tool surface (112) with the second top backing film (221) facing away from the first ceramic matrix composite ply (212) and the tool surface (112), positioning a second vacuum membrane against the second ceramic matrix composite ply (222) to provide a vacuum-tight seal against the second ceramic matrix composite ply (222) drawing a second vacuum to pull the second vacuum membrane against the second ceramic matrix composite ply (222) and thereby to form both the first and second ceramic matrix composite plies (212, 222) to shape of the tool surface (112), releasing the second vacuum, and after the second vacuum is released, peeling away the second top backing film (221) from the second ceramic matrix composite ply (222) and thereby to provide the ceramic matrix composite structure (400) with multiple ceramic matrix composite plies (212, 222) with the desired shape. Optionally, such method further involves orientating fiber reinforcements (214, 224) of each of the first and second ceramic matrix composite plies (212, 222) during placement of the ceramic matrix composite ply such that the fiber reinforcements reinforce each other to provide an improved ceramic matrix composite structure (400) with the desired shape.

In some embodiments an electronically-controlled method (600) for manufacturing a non-polymer structure (400) with a desired shape comprises placing (602) a non-polymer ply of material (210) on a forming tool (110), picking up the non-polymer ply of material (210), peeling away a bottom backing film (213) away from the picked non-polymer ply of material (210), applying a vacuum to form the non-polymer ply of material (210) to shape of the forming tool (110) and thereby to provide the non-polymer structure (400) with the desired shape, and after applying the vacuum to form the non-polymer ply of material (210) to shape of the forming tool (110), peeling away a top backing film (211) away from the shaped non-polymer ply of material (210). It will be understood that such method can be combined with one or more of the other method steps described earlier.

The described methods may be applied for manufacturing a portion of an aircraft (400), which optionally is provided with a number of flanges (215, 225) and/or a heat-shielding aircraft part (400). Such manufactured composite structure (400) preferably comprises at least one non-polymer ply of material (210), wherein each non-polymer ply of material is capable of withstanding temperatures up to 1,315 °C (2400 degrees Fahrenheit) during operational use of the manufactured composite structure (400). Preferably, the non-polymer ply of material (210) comprises a ceramic matrix composite ply (212). Also preferably, weight of the at least one non-polymer ply of material (210) for a given volume of the at least one non-polymer ply of material (210) is less than weight of an equivalent volume of metal material and/or viscosity of the at least one non-polymer ply of material (210) is between about 3000 Poise and about 7000 Poise. Optionally, tackiness of the at least one non-polymer ply of material (210) varies as a function of an amount of water contained in the at least one non-polymer ply of material (210), wherein tackiness of the at least one non-polymer ply of material (210) preferably varies as a function of an amount of solvent contained in the at least one non-polymer ply of material (210). In some of these structures the at least one non-polymer ply of material (210) comprises a plurality of ceramic matrix composite plies (212, 222) of material, and each ceramic matrix composite ply of material is capable of withstanding temperatures up to 1,315 °C (2400 degrees Fahrenheit) during operational use of the manufactured composite structure (400). Preferably, also in such structure, weight of each ceramic matrix composite ply of material (212, 222) for a given volume of the ceramic matrix composite ply of material is less than weight of an equivalent volume of metal material and/or viscosity of each ceramic matrix composite ply of material (212) is between about 3000 Poise and about 7000 Poise.

Aspects of disclosed embodiments may be implemented in software, hardware, firmware, or a combination thereof. The various elements of the system, either individually or in combination, may be implemented as a computer program product (program of instructions) tangibly embodied in a machine-readable storage device (storage medium) for execution by a processor. Various steps of embodiments may be performed by a computer processor executing a program tangibly embodied on a computer-readable medium to perform functions by operating on input and generating output. The computer-readable medium may be, for example, a memory, a transportable medium such as a compact disk or a flash drive, such that a computer program embodying aspects of the disclosed embodiments can be loaded onto a computer.

The above-described apparatus and method are described in the context of an aircraft. However, one of ordinary skill in the art will readily recognize that the disclosed apparatus and method are suitable for a variety of applications, and the present disclosure is not limited to aircraft manufacturing applications. For example, the disclosed apparatus and method may be implemented in various types of vehicles including, for example, helicopters, passenger ships, automobiles, marine products (boat, motors, etc.) and the like. Non-vehicle applications are also contemplated.

Also, although the above-description describes an apparatus and method for manufacturing a ceramic matrix composite structure for an airplane part in the aviation industry in accordance with military and space regulations, it is contemplated that the apparatus and method may be implemented to facilitate manufacturing a ceramic matrix composite structure in any industry in accordance with the applicable industry standards. The specific apparatus and method can be selected and tailored depending upon the particular application.

Further, although various aspects of disclosed embodiments have been shown and described, modifications may occur to those skilled in the art upon reading the specification. The present application includes such modifications and is limited only by the scope of the claims.

## Claims

1. An electronically-controlled method (600) for manufacturing a non-polymer structure (400) with a desired shape, the electronically-controlled method (600) comprising:
- placing (602) a non-polymer ply of material (210) on a forming tool (110);
- picking up the non-polymer ply of material (210);
- peeling away a bottom backing film (213) away from the picked non-polymer ply of material (210);
- applying a vacuum to form the non-polymer ply of material (210) to shape of the forming tool (110) and thereby to provide the non-polymer structure (400) with the desired shape; and
- after applying the vacuum to form the non-polymer ply of material (210) to shape of the forming tool (110), peeling away a top backing film (211) away from the shaped non-polymer ply of material (210).

2. The electronically-controlled method (600) of claim 1, wherein placing (602) a non-polymer ply of material (210) on a forming tool (110) includes placing a ceramic matrix composite ply (212) on the forming tool (110).

3. The electronically-controlled method (600) of claim 2, wherein placing a ceramic matrix composite ply (212) on the forming tool (110) includes placing a ceramic matrix composite ply (212) having fiber reinforcements (214) on the forming tool (110).

4. The electronically-controlled method (600) of any one of the preceding claims, wherein placing a non-polymer ply of material (210) on a forming tool (110) includes placing a fabric that is pre-impregnated with a matrix material on the forming tool (110).

5. The electronically-controlled method (600) of any one of the preceding claims, further comprising prior to applying the vacuum, positioning a vacuum membrane (142) onto the forming tool (110) to provide a vacuum-tight seal against the non-polymer ply of material (210).

6. The electronically-controlled method (600) of any one of the preceding claims, further comprising after applying the vacuum to form the non-polymer ply of material (210) to shape of the forming tool (110), placing another non-polymer ply of material (220) on the shaped non-polymer ply of material (210).

7. The electronically-controlled method (600) of claim 6, further comprising applying another vacuum to form the other non-polymer ply of material (220) to shape of the shaped non-polymer ply of material (210) and the forming tool (110) and thereby to form the non-polymer structure (400) with multiple non-polymer plies of material (210, 220) with the desired shape.

8. The electronically-controlled method (600) of claim 7, when dependent on claim 6, further comprising inspecting each of the non-polymer plies of material (210, 220) and the non-polymer structure (400) to verify placement and compaction of plies and removal of bottom and top backing films.

9. The electronically-controlled method (600) of any one of the preceding claims, wherein weight of the non-polymer structure (400) for a given volume of the non-polymer structure is less than weight of an equivalent volume of a metal structure.

10. Manufacturing a portion of an aircraft (400) comprising the electronically-controlled method of any one of the claims 1 to 9.

11. Manufacturing an aircraft part (400) comprising the electronically-controlled method of any one of the claims 1 to 9, wherein:
- the aircraft part (400) has a number of flanges (215, 225); or
- the aircraft part (400) is a heat-shielding aircraft part (400).

12. A manufactured composite structure (400) comprising at least one non-polymer ply of material (210), wherein each non-polymer ply of material is capable of withstanding temperatures up to 1,315 °C (2400 degrees Fahrenheit) during operational use of the manufactured composite structure (400), wherein the manufactured composite structure (400) is manufactured using the electronically-controlled method of any one of the claims 1 to 9.

13. A manufactured composite structure (400) according to claim 12, wherein:
- the non-polymer ply of material (210) comprises a ceramic matrix composite ply (212); and/or
- weight of the at least one non-polymer ply of material (210) for a given volume of the at least one non-polymer ply of material (210) is less than weight of an equivalent volume of metal material; and/or
- viscosity of the at least one non-polymer ply of material (210) is between about 3000 Poise and about 7000 Poise; and/or
- tackiness of the at least one non-polymer ply of material (210) varies as a function of an amount of water contained in the at least one non-polymer ply of material (210); and/or
- tackiness of the at least one non-polymer ply of material (210) varies as a function of an amount of solvent contained in the at least one non-polymer ply of material (210)

14. A manufactured composite structure (400) according to any one of the claims 12 or 13, wherein (i) the at least one non-polymer ply of material (210) comprises a plurality of ceramic matrix composite plies (212, 222) of material, and (ii) each ceramic matrix composite ply of material is capable of withstanding temperatures up to 1,315 °C (2400 degrees Fahrenheit) during operational use of the manufactured composite structure (400).

15. A manufactured composite structure (400) according to claim 14, wherein:.
- weight of each ceramic matrix composite ply of material (212, 222) for a given volume of the ceramic matrix composite ply of material is less than weight of an equivalent volume of metal material; and/or
- viscosity of each ceramic matrix composite ply of material (212) is between about 3000 Poise and about 7000 Poise.
